# EUROPEAN PATENT APPLICATION

(11) **EP 1 531 585 A2**
(43) Date of publication of application: **18.05.2005**
(21) Application number: 04024962.5
(22) Date of filing: 20.10.2004
(51) Int. Cl.: H04L 12/56

(54) **Wireless electronic communication device and program**

(30) Priority: 17.11.2003 JP 2003387202
(71) Applicant: Kabushiki Kaisha Toshiba, Tokyo 105-8001 (JP)
(72) Inventor: Homma, Toru, Toshiba Corporation, Minato-ku, Tokyo 105-8001 (JP); Kawamura, Takuya, Toshiba Corporation, Minato-ku, Tokyo 105-8001 (JP)
(74) Representative: Henkel, Feiler & Hänzel

(57) **Abstract**

An electronic device capable of executing wireless communication comprises a communication unit (101) which issues a station discovery request to peripheral devices capable of transmitting data by wireless communication, a display unit (13) which presents, in a selectable manner, devices which have responded to the station discovery request and presents a connection parameter with respect to a selected device in a registerable manner, and a processing unit (201, 202) which executes connection processing with respect to the device whose connection parameter is registered, and acquires predetermined information from the connected device in a predetermined cycle.

## Description

Embodiments of the present invention relate to an electronic device capable of executing wireless communication and to a program which is applied in the electronic device.

In recent years, a new wireless communication system to connect electronic devices with each other has been developed. This type of wireless communication system utilizes the Bluetooth™ standard, which is a short-distance wireless communication mode designed for connecting not only computers but also various electronic devices being determined as a target.

According to the Bluetooth™ standard, a station discovery function is defined. The station discovery function is a function of discovering a new device adapted for wireless communications. Other electronic devices existing in a wireless communication enabled coverage area of a given electronic device can be discovered by utilizing this station discovery function.

The station discovery function is realized by a scheme in which a given electronic device transmits a station discovery request (inquiry) through a wireless signal and another electronic device which has received this station discovery request responds to the station discovery request. The station discovery function is realized by acquiring an address of a device which has responded to the station discovery request (inquiry) and performing a device name acquisition request (Name discovery) and acquire a name of a device which has responded to this request (Device Names) (see Japanese Patent Application KOKAI Publication No. 2002-325081).

With the rapid spread of digital cameras and mobile phones equipped with a camera, opportunities to exchange images between the mobile devices are increasing. Bluetooth™ is an effective, low-power consumption communication link used to readily exchange images between such mobile devices. A method for transmitting/receiving images based on Bluetooth™ is standardized as Basic Imaging Profile (BIP) (Bluetooth specification), and a method for remotely controlling a camera is defined as Remote Camera Feature (RCF) in this standardized method. In RCF, a device which performs an image acquisition request is defined as an "Initiator" and a device having a capability to capture images like a digital camera is defined as a "Responder", and they have the following functions.

Monitoring image acquisition function: Get Monitoring Image (0)
Shutter control function: Get Monitoring Image (1)
Photographed image acquisition function: Get Image

The Initiator can occasionally acquire a monitoring image captured by the Responder as a still image of a thumbnail size (Get Monitoring Image (0)), transmit a shutter control signal with an arbitrary timing (Get Monitoring Image (1)), and acquire a photographed image in a desired size (Get Image).

In a wireless network based on a wireless transmission mode utilizing the above-described Bluetooth™, processing after connecting the devices with each other is not defined. For,example, in image acquisition processing or the like utilizing the Initiator function of RCF, image information is acquired with a user operation involved each time, and there is a problem of the operability and the transfer efficiency.

The present invention is directed to method and apparatus that substantially obviates one or more of the problems due to limitations and disadvantages of the related art.

According to an embodiment of the present invention, an electronic device capable of executing wireless communication comprises:
a communication unit which issues a station discovery request to peripheral devices capable of transmitting data by wireless communication;
a display unit which presents, in a selectable manner, devices which have responded to the station discovery request and presents a connection parameter with respect to a selected device in a registerable manner; and
a processing unit which executes connection processing with respect to the device whose connection parameter is registered, and acquires predetermined information from the connected device in a predetermined cycle.

According to another embodiment of the present invention, an article of manufacture comprises a computer usable medium having computer readable program code means embodied therein and the computer readable program code means comprises:
computer readable program code means for causing a computer to issue a station discovery request to peripheral devices capable of transmitting data by wireless communication;
computer readable program code means for causing a computer to present, in a selectable manner, devices which have responded to the station discovery request and presents a connection parameter with respect to a selected device in a registerable manner; and
computer readable program code means for causing a computer to execute connection processing with respect to the device whose connection parameter is registered, and acquire predetermined information from the connected device in a predetermined cycle.

According to another embodiment of the present invention, a method comprises issuing a station discovery request station; receiving and storing connection parameters of a plurality of devices responding to the station discovery request; selecting a device of the plurality of devices to be connected to; and registering information of the device including a connection parameter used to establish a wireless connection to the device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary perspective view showing an exterior appearance of a computer according to a first embodiment of the present invention;
FIG. 2 is an exemplary block diagram showing a structure of the computer according to the first embodiment of the present invention;
FIG. 3 is an exemplary block diagram showing a structure of an image acquisition apparatus according to the first embodiment of the present invention;
FIG. 4 is an exemplary flowchart showing a procedure of peripheral device retrieval processing according to the first embodiment of the present invention;
FIG. 5 is an exemplary view showing a structural example of a screen displaying a peripheral device according to the first embodiment of the present invention;
FIG. 6 is an exemplary flowchart showing a procedure of registration processing and registered device connection processing according to the first embodiment of the present invention;
FIG. 7 is an exemplary block diagram showing a structure of an image display apparatus according to a second embodiment of the present invention;
FIG. 8 is an exemplary flowchart showing a procedure of processing when shifting to a suspend state according to the second embodiment of the present invention;
FIG. 9 is an exemplary flowchart showing a procedure of processing at the time of resume according to the second embodiment of the present invention;
FIG. 10 is an exemplary flowchart showing a procedure of registration processing, registered device connection processing and registration deletion processing according to a third embodiment of the present invention; and
FIG. 11 is an exemplary view showing an example of a dialog asking a user whether registration is performed again at the time of disconnection according to the third embodiment of the present invention.

Embodiments according to the present invention will now be described hereinafter with reference to the accompanying drawings. First Embodiment

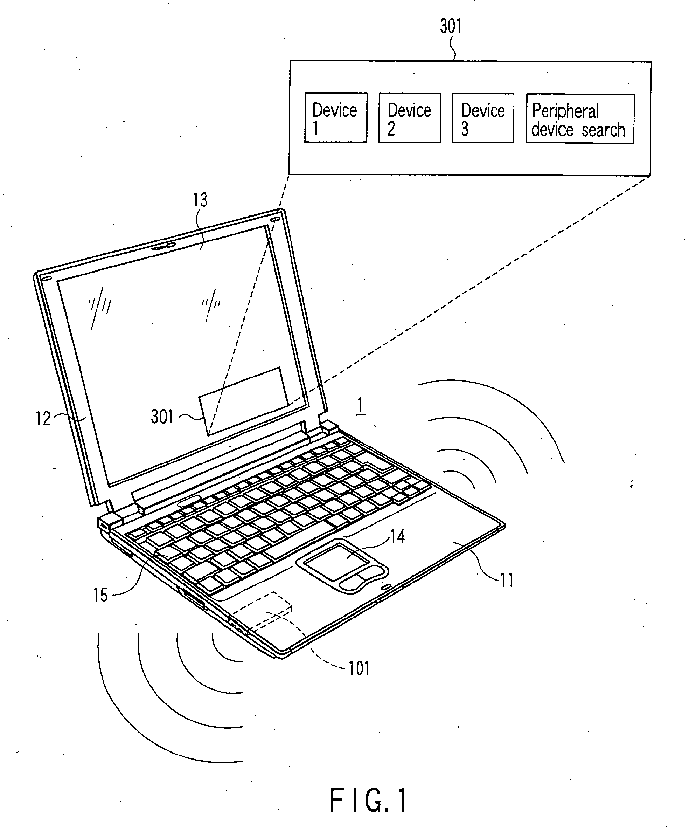

A first embodiment according to the present invention will be described with reference to FIGS. 1 to 6. In the first embodiment, an electronic device controlled by a user registers a device, and executes connection processing by using a connection parameter of the registered device. The terms "processing" and "portion" may be used to represent software being executable code in the form of an application, an applet, a routine or even a series of instructions. The software may be stored in any type of machine readable medium such as a programmable electronic circuit, a storage device such as a semiconductor memory device inclusive of volatile memory (e.g., random access memory, etc.) and/or non-volatile memory (e.g., any type of read-only memory "ROM," flash memory) or a hard drive disk, or a portable storage device such as a floppy diskette, an optical disk (e.g., compact disk or digital video disk "DVD"). When the connection is established, image information is repeatedly acquired from the connected device in a predetermined cycle.

FIG. 1 shows an example of a structure of an electronic device according to the embodiment of the present invention. The electronic device according to the present invention may be implemented as, for example, a PDA (Personal Digital Assistant), a notebook type portable personal computer or the like having a wireless communication function. FIG. 1 shows an example in which the electronic device is implemented as a portable personal computer.

FIG. 1 is a perspective view showing an exterior appearance in a state in which a display unit of this computer 1 is opened. This computer 1 comprises a computer main body 11 and a display unit 12. The display unit 12 is attached to the computer main body 11 to be capable of swiveling between an opening position and a closing position. An LCD (Liquid Crystal Display) 13 which constitutes a display panel is incorporated in the display unit 12, and the LCD 13 is positioned at a substantially central portion of the display unit 12.

A screen of a list of devices found by a station discovery function (hereinafter referred to as a "remote device list screen") 301 is displayed on the LCD 13. The remote device list screen 301 is a GUI (Graphical User Interface), which identifies wireless devices existing around a place where the computer 1 is located. These wireless devices can be selected by a user, and this screen 301 is used in order to allow a user to select a communication (connection) partner. In the remote device list screen 301, a device which should be connected can be selected by operating, e.g., a pointing device 14.

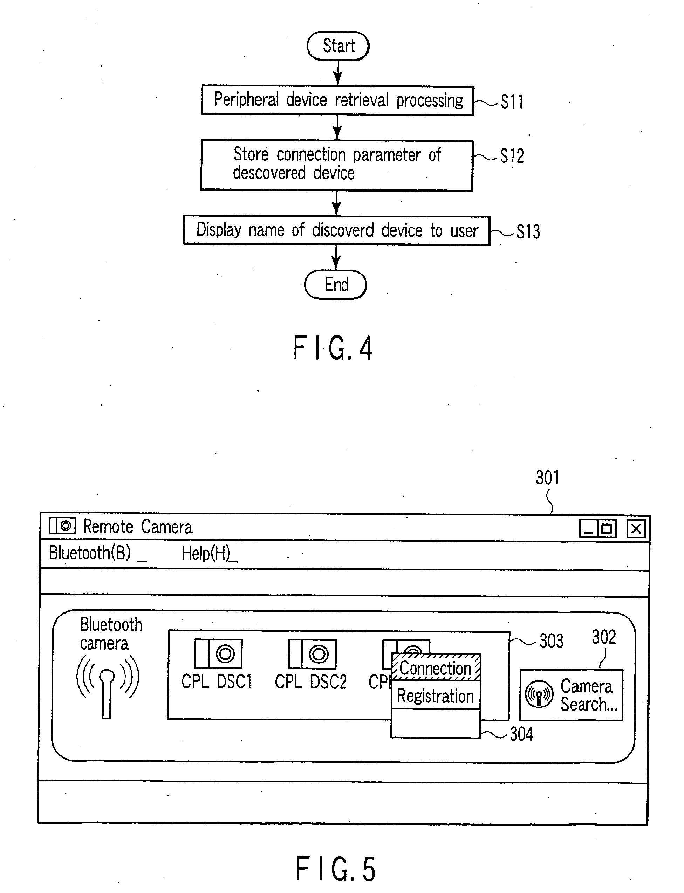

Further, in the remote device list screen 301, a parameter (connection parameter), which is used to connect a selected wireless device, can be registered by likewise operating the pointing device 14. An example of the remote device list screen 301 will be described later with reference to FIG. 5.

The computer main body 11 has a box-like case, and on an upper surface thereof is arranged a keyboard 15 as well as the pointing device 14. Furthermore, a wireless communication device 101 is included in the computer main body 11.

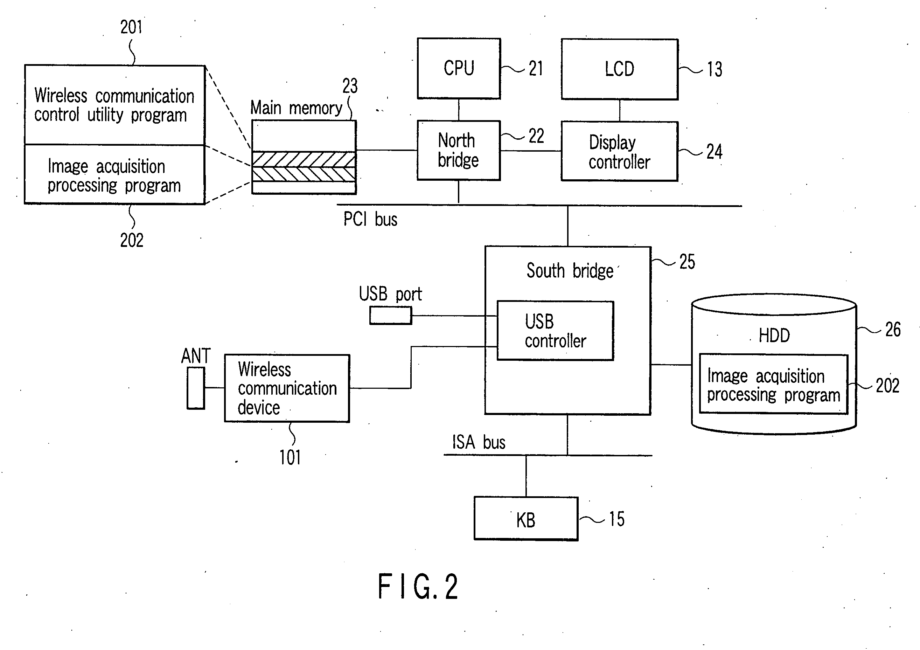

The wireless communication device 101 is a device which provides wireless communications, and is designed to provide wireless communication signals defined by the standard of near-distance wireless communications such as Bluetooth™. The operations of the wireless communication device 101 are controlled by a wireless communication control utility program (see reference numeral 201 in FIG. 2) which is a program executed in the computer 1.

The wireless communication control utility program 201 comprises a station discovery function, a function to display the remote device list screen 301 in the display screen of the LCD 13, a device selection function involved with the selection operation in the remote device list screen 301, an acquisition/registration function for a connection parameter which is used to connect to a selected device, a function to process a connection request with respect to a device whose connection parameter is registered and establish a connection involved by this request (automatic connection).

FIG. 2 shows a system configuration of this computer 1. This computer 1 includes a CPU 21, a north bridge 22, a main memory 23, a display controller 24, a south bridge 25, a hard disk drive (HDD) 26, the wireless communication device 101 and others as shown in the drawing.

The CPU 21 is a processor which is provided to control an operation of this computer 1, and executes an operating system (OS) and various application programs loaded in the main memory 23 from the hard disk drive (HDD) 26. In this embodiment, in addition to the wireless communication control utility program 201, an image acquisition processing program 202 is loaded in the main memory 23 from the hard disk drive (HDD) 26 and executed by the CPU 21. When executed, the image acquisition processing program 202 undergoes a series of processing operations to acquire image information in a predetermined cycle, without interposing an operation command by a user, from a device automatically connected according to the wireless communication control utility program 201. An example of a "predetermined cycle" varies depending on the amount of time between image acquisition requests and responses to these requests. Normally, the predetermined cycle is less than ten (10) times per second and may range at 2-3 per second for example. Specific processing functions of the image acquisition processing program 202 will be described later.

The above-described wireless communication control utility program 201, the image acquisition processing program 202 and others are stored in the hard disk drive (HDD) 26. The wireless communication control utility program 201 and the image acquisition processing program 202 stored in the hard disk drive 26 are loaded in the main memory 23 and executed by the CPU 21. At this time, the image acquisition processing program 202 is processed by the CPU 21 when the device connection is achieved through connection processing of the wireless communication control utility program 201. The details of the processing at this time will be described later.

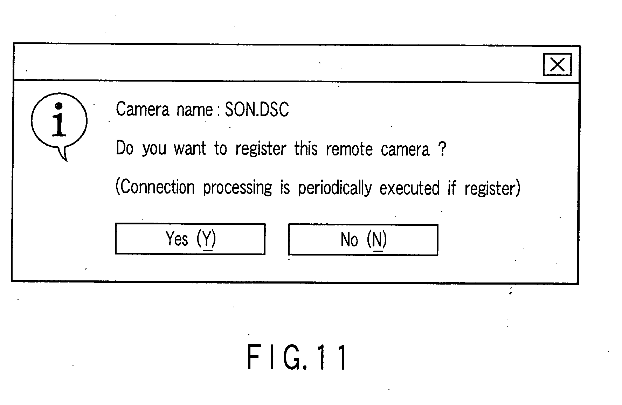

The display controller 24 controls the LCD 13 which is used as a display monitor of this computer. In this embodiment, such user interface screens as shown in FIGS. 5 and 11 are displayed in the LCD 13. The details of these user interface screens will be described later.

The north bridge 22 is a bridge device which connects a first bus (e.g., local bus of the CPU 21) with a second bus (e.g., PCI bus) in a bidirectional manner. The south bridge 25 is a bridge device which connects the second (PCI) bus with a third bus (e.g., an ISA bus) in a bidirectional manner. The above-described keyboard (KB) 15 is connected to the third (ISA) bus. A USB (Universal Serial Bus) controller is included in the south bridge 25. The wireless communication device 101 is connected to the USB controller.

The wireless communication device 101 executes discovery, connection and data transfer functions of computer 1 with a device operating as a connection partner and existing on the periphery of computer main body 11. This wireless communication control 101 is under control of the wireless communication control utility program 201. The wireless communication device 101 executes transmission/reception of a wireless signal through an antenna (ANT) in accordance with a command input from the CPU 21 via the USB controller.

The wireless communication device 101 includes an RF portion and a base band portion. The RF portion performs up-conversion from an intermediate frequency into an RF frequency, down-conversion from an RF frequency into an intermediate frequency and perhaps other types of frequency conversion. The base band portion carries out modulation of transmission data and demodulation of reception data in accordance with a predetermined wireless communication protocol.

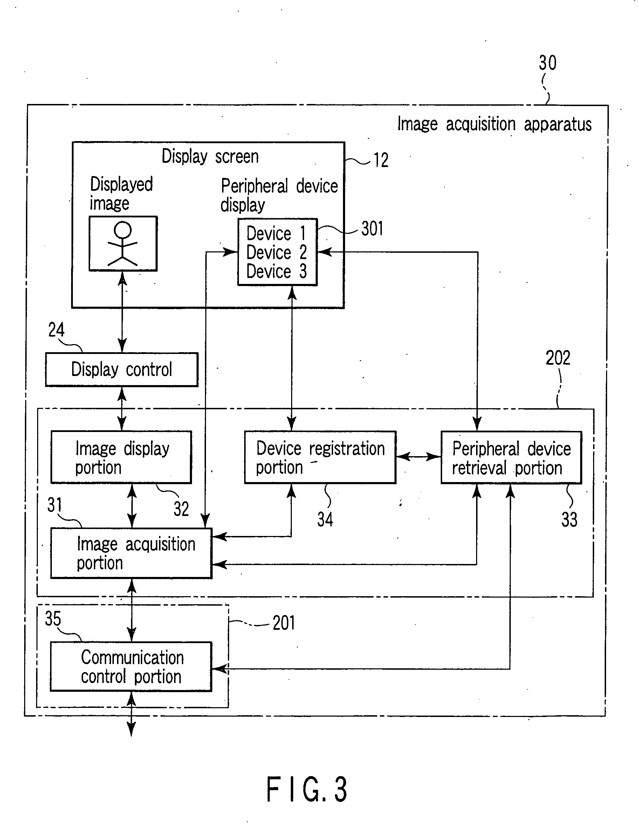

FIG. 3 shows an exemplary diagram of an image acquisition apparatus 30 forming the function elements depicted in FIGS. 1 and 2. The image acquisition apparatus 30 comprises an image acquisition portion 31, an image display portion 32, a peripheral device retrieval portion 33, a device registration portion 34, a communication control portion 35 and others. The image acquisition portion 31, the image display portion 32, the peripheral device retrieval portion 33 and the device registration portion 34 are function elements of a processing routine of the image acquisition processing program 202 shown in FIG. 2. The communication control portion 35 is a function element of the wireless communication control utility program 201 shown in FIG. 2.

The peripheral device retrieval portion 33 retrieves devices existing around the computer 1 and services of these devices by utilizing the communication control portion 35 in response to a command from a user, and acquires and stores parameter information (connection parameters) used to connect with the services of the discovered devices.

FIG. 4 shows a procedure of this peripheral device retrieval processing in the form of a flowchart. FIG. 5 shows a structure of the remote device list screen 301 displayed in the display screen (LCD 13) of the display unit 12 in this processing.

When a device retrieval instruction button (device search button) 302 in the remote device list screen 301 depicted in FIG. 5 is selected (block S11 in FIG. 4), the peripheral device retrieval portion 33 starts processing the previously defined station discovery function. This is adapted to retrieve information concerning devices existing on the periphery of the wireless communication enlisted coverage area.

When devices existing in a peripheral wireless communication enabled area are discovered in this retrieval, the connection parameters of the discovered devices are acquired and stored (block S12 in FIG. 4). A list of device names of the discovered devices is displayed in the display screen (LCD 13) of the display unit 12 (block S13 in FIG. 4). In this embodiment, the discovered devices are displayed in a device selection operation area 303 of the remote device list screen 301 depicted in FIG. 5 in such a manner that these devices can be selected. At this time, it is determined that the method for retrieving the peripheral devices and services thereof complies with the protocol based on Bluetooth™.

When a user selects a device to be connected from the devices displayed in the device selection operation area 303 of the remote device list screen 301, a connection/registration selection menu 304 is displayed in accordance with the selected device in the device selection operation area 303.

When "registration" is selected in the connection/registration selection menu 304, the device registration portion 34 stores information of the selected device (device address) as registration processing, and requests connection processing to the image acquisition portion 31 in order to connect with the registered device. Upon receiving the information of the registered device (device address) as a connection request with the registered device from the device registration portion 34, the image acquisition portion 31 acquires the detailed connection parameter which is used to connect with the registered device from the peripheral device retrieval portion 33, and performs the connection processing. When the .connection processing is successful, the image acquisition portion 31 repeatedly executes the image acquisition request with respect to the connected device in a predetermined cycle.

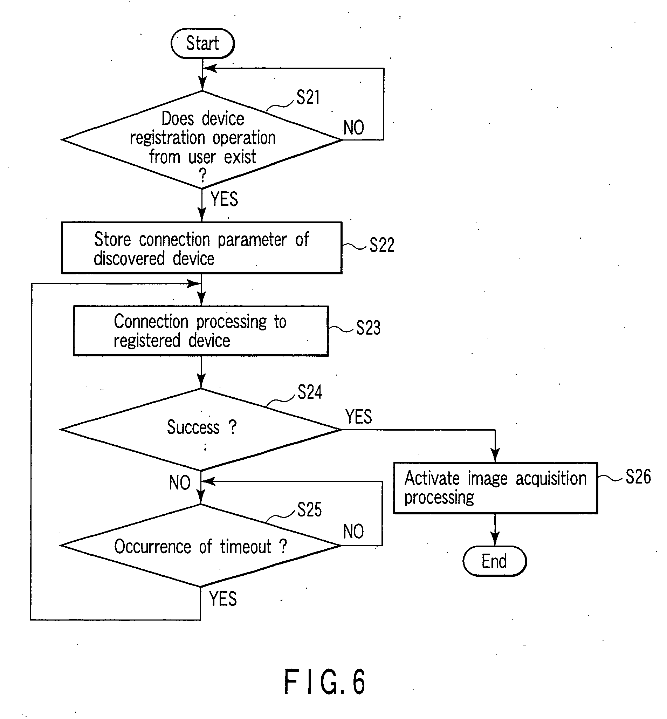

FIG. 6 shows a procedure of the registration processing, connection processing to the registered device and the image acquisition processing at this time in the form of a flowchart.

When "registration" is selected in the connection/registration selection menu 304 of the remote device list screen 301 (Yes at block S21 in FIG. 6), the device registration portion 34 stores information of the device selected by a user (e.g., a device address) (block S22 in FIG. 6). The device registration portion 34 requests the image acquisition portion 31 to connect with the selected device. The image acquisition portion 31 uses the peripheral device retrieval portion 33 to acquire the detailed connection parameter used to connect with the device specified by the connection request from device registration portion 34 and executes the connection processing to the specified device by using the acquired connection parameter (block S23 in FIG. 6). At this time, the image acquisition portion 31 supplies the connection parameter to the communication control portion 35, and executes the connection processing to the device selected by a user through the communication control portion 35. When no connection is established with respect to the device selected by a user in this connection processing (No at block S24 in FIG: 6), the connection processing is executed again after a predetermined time lag (block S25 in FIG. 6). Incidentally, when the connection is not successful even if the connection processing is repeated for a predetermined number of times, a user is informed of this fact, and processing to, e.g., abandon the connection processing with respect to the device selected by the user is executed. This processing will not be described here in particular.

When the connection is achieved with respect to the device selected by a user (Yes at block S24 in FIG. 6), the image acquisition portion 31 starts image acquisition processing which repeatedly executes the image acquisition request with respect to the connected device in a predetermined cycle (block S26 in FIG. 6).

It is to be noted that the parameter used for connection is acquired from the peripheral device retrieval portion 33 when the image acquisition portion 31 is connected with the device from which an image is acquired by utilizing the communication control portion 35. Hence, the peripheral device retrieval portion 33 retrieves the service of this device each time and acquires the connection parameter again, thereby effecting the connection request by using the latest connection parameter.

According to the first embodiment, the electronic device can smoothly and efficiently execute acquisition of information after connection of devices with each other in a wireless network using a wireless transmission mode and can execute wireless communication with the good usability, thus improving the usability. Second Embodiment

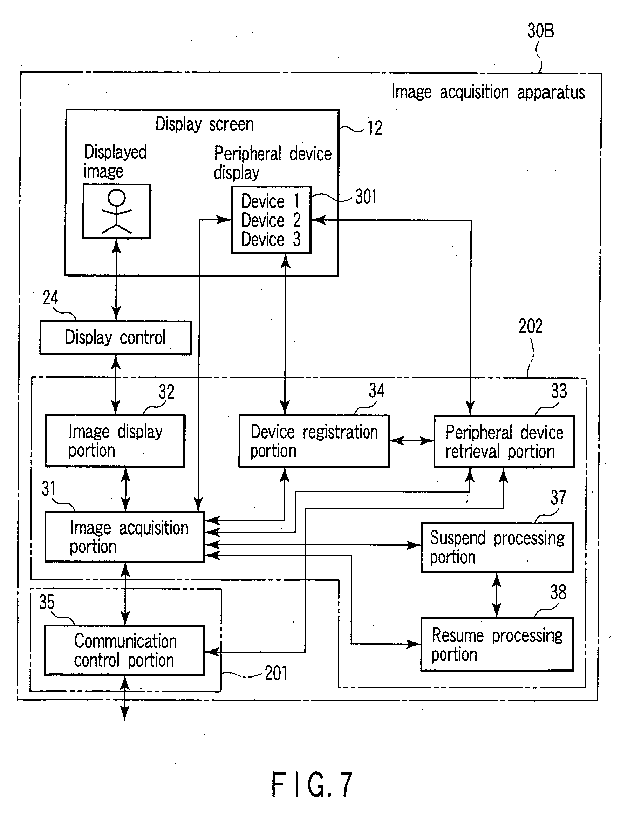

A second embodiment according to the present invention will now be described with reference to FIGS. 7 to 9.

FIG. 7 shows a structural example of an image acquisition apparatus 30B in the second embodiment according to the present invention. To the image acquisition apparatus 30B in the second embodiment are further provided a suspend processing portion 37 and a resume processing portion 38 in addition to the function elements in the image acquisition apparatus 30 in the first embodiment shown in FIG. 3.

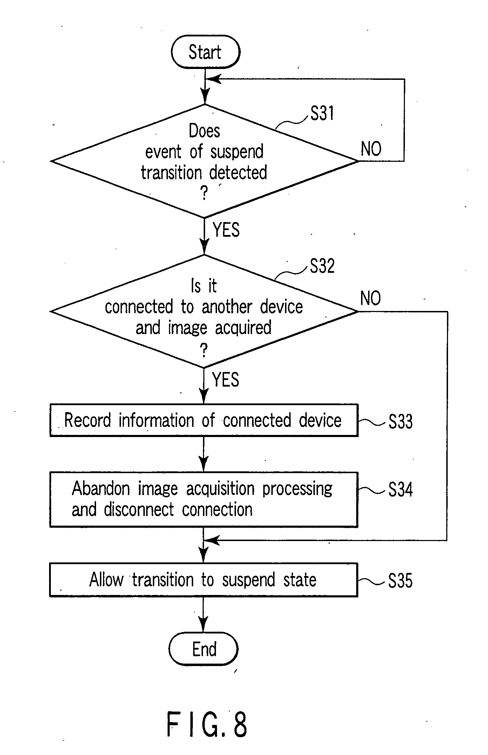

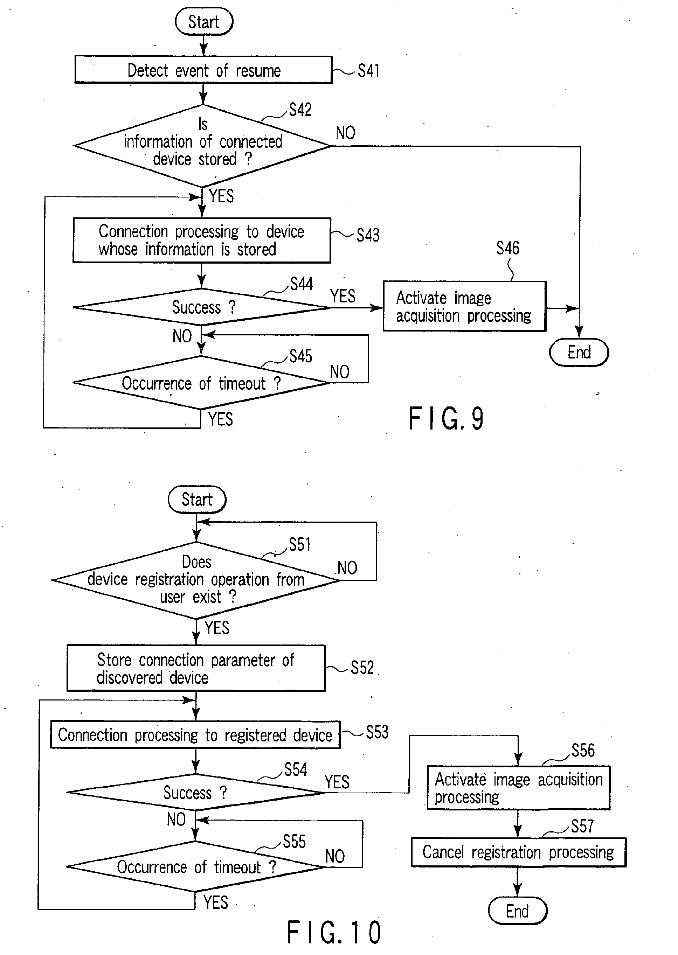

FIG. 8 shows a processing procedure of the suspend processing portion 37, and FIG. 9 shows a processing procedure of the resume processing portion 38.

In a state in which the image acquisition apparatus 30B is connected with a device as an image acquisition target, i.e., while images are repeatedly acquired by processing of the image acquisition portion 31 and the image display portion 32 is performing the display processing, the suspend processing portion 37 executes the processing shown in FIG. 8 when the target device shifts to a suspend state (hibernation, suspended state).

Upon detects that the target device is changed to the suspend state while executing the image acquisition processing (blocks S31 and S32 in FIG. 8), the suspend processing portion 37 acquires and stores information of a currently connected device (device address) (block S33 in FIG. 8), aborts the image acquisition processing and disconnection of the connected device to the image acquisition portion 31 (block S34 in FIG. 6), and allows the image acquisition apparatus 30B to shift to the suspend state (block S35 in FIG. 6). Thereafter, the image acquisition apparatus 30B, including the suspend processing portion 37, shifts to the suspend state.

After the suspend processing, when the image acquisition apparatus 30B is restarted by a resume operation, the resume processing portion 38 detects an event of this resume (block S41 in FIG. 9), conforms information of the device connected in the suspend state which is stored in the suspend processing portion 37 (Yes at block S42 in FIG. 9), and requests re-connection with this device to the image acquisition portion 31. Upon accepting the re-connection request from the resume processing portion 38, the image acquisition portion 31 obtains the parameter used to connect with this device from the peripheral device retrieval portion 33, and connects with this device by utilizing the communication control portion 35 (block S43 in FIG. 9).

When connection attains success (Yes at block S44 in FIG. 9), the image acquisition portion 31 repeatedly executes the image acquisition request (block S46 in FIG. 9), supplies an acquired image to the image display portion 32, and displays this image in the display screen (LCD 13) of the display unit 12. When the image acquisition portion 31 fails in connection (No at block S45 in FIG. 9) as a result of executing the connection request for multiple times (blocks S43 to S45 in FIG. 9), it informs the resume processing portion 38 of this fact. When the resume processing portion 38 is informed of a fail in connection by the image acquisition portion 31, it then periodically requests connection with the device connected at the time of suspend with respect to the image acquisition portion 31.

In the second embodiment, the image acquisition portion 31 acquires the connection parameter using the peripheral device retrieval portion 33 when connecting with a device from which an image is acquired by utilizing the communication control portion 35. The peripheral device retrieval portion 33 retrieves the service of this device each time when acquiring the connection parameter of this device, and obtains the connection parameter again, thereby effecting the connection request by using the latest connection parameter.

### Third Embodiment

A third embodiment according to the present invention will now be described with reference to FIGS. 10 and 11.

The third embodiment differs from the first embodiment in that processing to delete registration of a device (connection parameter of a target device is deleted from the device registration portion 34) is carried out when connection with the registered device is completed, and the image acquisition processing repeated in a predetermined cycle is applied to current connection alone.

FIG. 10 shows a processing procedure of the third embodiment. In the processing shown in FIG. 10, since processing at blocks S51 to S56 is the same as the processing (blocks S21 to S26) of the first embodiment, its explanation will be eliminated here.

When connection attains success (Yes at block S54 in FIG. 10), the image acquisition portion 31 moves the connection parameter of a connected device from the device registration portion 34 to a temporary storage portion (not shown), starts execution of the image acquisition processing repeated in a predetermined cycle by using this connection parameter (block S56 in FIG. 10), and deletes this connection parameter from the device registration portion 34 (block S57 in FIG. 10). As a result, it is possible to execute the image acquisition processing repeated in a predetermined cycle based on the device which is connected for this time only.

Here, although various timings to delete the registration can be considered, by effecting the timing when a user explicitly requests disconnection to that device, it is possible to confirm with the user regarding whether registration is performed again at the same time. FIG. 11 shows an example of a dialog asking a user whether registration is effected again at the time of disconnection. When a user performs an operation not to carry out registration (No), the image acquisition portion 31 deletes the connection parameter of the currently connected device from the device registration portion 34. When a user performs an operation to effect registration (Yes), the image acquisition portion 31 writes the connection parameter again which has been moved to the temporary storage portion into the device registration portion 34.

A description will now be given as to an effect obtained when the image acquisition function of the embodiments is applied to an application program which connects with a digital still camera based on Bluetooth™ and acquires a monitoring image.

A procedure to connect with the camera can be simplified. For example, when the camera is connected and registered, the connection processing with respect to this camera and the image acquisition processing after completion of connection are automatically executed by just activating the application next time. Therefore, when a user simply sets the camera to the standby mode for connection after activating the application, the connection and the image acquisition processing are automatically started. When the image acquisition method according to the embodiment of the present invention is not used, it is possible to simplify the connection operation procedure according to the embodiments of the present invention as compared with the processing to activate the application on the image acquisition apparatus, sets the camera to the standby mode for connection, retrieve the camera on the image acquisition apparatus side and start the connection. On the other hand, when the camera is already in the standby mode for connection, an image acquired from the camera is immediately and automatically displayed simply by activating the application on the image acquisition apparatus, thereby greatly simplifying the operation procedure.

Additionally, when the connection with the camera is registered at the time of disconnection of the connection with the camera, it is possible to connect with the camera and acquire an image simply by setting the camera again to the standby mode for connection. Further, when the camera is assumed as a connection target, since constant automatic connection is not necessary as different from a mouse or a keyboard, enabling cancel of registration after connection is desirable, but cancel of registration after connection is enabled by applying the third embodiment according to the present invention. On the contrary, there is a case in which various kinds of information such as images or sounds should be intermittently continuously acquired (or transferred) for a long time with a device or devices being determined as targets. In such a case, for example, in the registration processing at block S22 shown in FIG. 6, various kinds of information, such as image files, sound files or text files can be intermittently continuously acquired or transferred for a long time by executing the connection processing at block S23 every time a given even occurs or every set time after registering the connection parameter of a partner device in the device registration portion 34.

It is to be noted that the image information acquisition processing is taken as an example in the foregoing embodiments, but the present invention is not restricted thereto, and it can be likewise applied to information acquisition processing or the like to specify and continuously read multimedia information such as text, sound, moving pictures, still pictures or images. Furthermore, in the foregoing embodiments, information acquisition from a connection destination device is a target of processing, but the processing can be also applied when periodically and continuously transferring a predetermined text file, an image file or the like to a predetermined device.

## Claims

1. An electronic device capable of executing wireless communication, the device **characterized by** comprising:
a communication unit (101) to issue a station discovery request to peripheral devices capable of transmitting data by wireless communication;
a display unit (13) to present, in a selectable manner, each device responding to the station discovery request and registering a connection parameter with respect to a selected device; and
a processing unit (201, 202) to execute connection processing with respect to the device whose connection parameter is registered, and to acquire predetermined information from the connected device in a predetermined cycle.

2. The electronic device according to claim 1, **characterized in that** the processing unit (201, 202) issues an image acquisition request to the connected device in the predetermined cycle and displays an acquired image.

3. The electronic device according to claim 1, **characterized in that** the processing unit (201, 202) comprises:
a suspend processing unit (S34) to execute disconnection processing with respect to the connected device, and stores the connection parameter of the disconnected device; and
a resume processing unit (S43) to re-execute the connection processing with respect to the disconnected device by using the connection parameter stored in the suspend processing unit.

4. The electronic device according to claim 1, **characterized in that** the processing unit (201, 202) cancels registration of the connection parameter of the connected device when connection with the device whose connection parameter is registered is successful, and does not execute the periodic connection processing with respect to the device whose registration of the connection parameter is canceled after disconnecting connection with the device.

5. The electronic device according to claim 1, **characterized in that** the processing unit (201, 202) comprises a user interface (301) to allow a user to select whether the connection parameter is registered when disconnecting connection with the device whose connection parameter is registered after connecting with the device, and
the processing unit (201, 202) cancels registration of the connection parameter when no registration of the connection parameter is selected by the user interface, and does not continue the periodic connection processing with respect to the device whose registration of the connection parameter is canceled after connection with the device is once disconnected.

6. The electronic device according to claim 1, **characterized in that** the processing unit (201, 202) periodically executes the connection processing with respect to the device whose connection parameter is registered, and acquires predetermined information from the connected device in a predetermined cycle every time connection is achieved.

7. An article of manufacture comprising a computer usable medium having computer readable program code means embodied therein, the computer readable program code means **characterized by** comprising:
computer readable program code means for causing a computer to issue a station discovery request to peripheral devices capable of transmitting data by wireless communication;
computer readable program code means for causing a computer to present, in a selectable manner, devices responding to the station discovery request and to present a connection parameter with respect to a selected device in a registerable manner; and
computer readable program code means for causing a computer to execute connection processing with respect to the device whose connection parameter is registered, and to acquire predetermined information from the connected device in a predetermined cycle.

8. The article of manufacture according to claim 7, **characterized by** further comprising:
computer readable program code means for causing a computer to issue an image acquisition request to the connected device in the predetermined cycle and display an acquired image.

9. The article of manufacture according to claim 7, **characterized by** further comprising:
computer readable program code means for causing a computer to execute disconnection processing with respect to the connected device, and store the connection parameter of the disconnected device; and
computer readable program code means for causing a computer to re-execute the connection processing with respect to the disconnected device by using the stored connection parameter.

10. The article of manufacture according to claim 7, **characterized by** further comprising:
computer readable program code means for causing a computer to cancel registration of the connection parameter of the connected device when connection with the device whose connection parameter is registered attains success, and not to execute the periodic connection processing with respect to the device whose registration of the connection parameter is canceled after disconnecting connection with the device.

11. The article of manufacture according to claim 7, **characterized by** further comprising:
computer readable program code means for causing a computer to provide a user interface which allows a user to select whether the connection parameter is registered when disconnecting connection with the device whose connection parameter is registered after connecting with the device, and
computer readable program code means for causing a computer to cancel registration of the connection parameter when no registration of the connection parameter is selected by the user interface, and not to continue the periodic connection processing with respect to the device whose registration of the connection parameter is canceled after connection with the device is once disconnected.

12. A method **characterized by** comprising:
issuing a station discovery request station;
receiving and storing connection parameters of a plurality of devices responding to the station discovery request;
selecting a device of the plurality of devices to be connected to; and
registering information of the device including a connection parameter used to establish a wireless connection to the device.

13. The method according to claim 12,
**characterized by** further comprising:
establishing a wireless connection to the device using the connection parameter.

14. The method according to claim 12,
**characterized in that** the information includes an address of the device.

15. The method according to claim 12,
**characterized by** further comprising:
attempting to establish a wireless connection to the device; and
attempting to establish the wireless connection after a predetermined time lag has expired if no wireless connection is established with the device.

16. The method according to claim 12,
**characterized in that** after receiving the connection parameters, the method further comprising:
displaying items identifying the devices on a display screen as a remote device list screen.

17. The method according to claim 12,
**characterized by** further comprising:
attempting to establish a wireless connection to the device; and
abandoning connection processing after failure to establish the wireless connection with the device.

18. The method according to claim 12,
**characterized by** further comprising:
detecting the device being changed to a suspend state; and
acquiring and storing .information of the connected device, aborting the image acquisition processing and disconnecting of the connected device.

19. The method according to claim 12,
**characterized by** further comprising:
deleting registration of the connection parameter of the device when connection with the registered device is completed.
